(19) **Europäisches Patentamt / European Patent Office / Office européen des brevets**

(11) **EP 4 641 168 A1**

(12) **EUROPEAN PATENT APPLICATION**
published in accordance with Art. 153(4) EPC

(43) Date of publication:
**29.10.2025 Bulletin 2025/44**

(21) Application number: **24849690.3**

(22) Date of filing: **01.08.2024**

(51) International Patent Classification (IPC):
**G01N 11/10** (2006.01)    **H01M 10/42** (2006.01)
**G01N 11/00** (2006.01)

(52) Cooperative Patent Classification (CPC):
**G01N 11/00; G01N 11/10; H01M 10/42; Y02E 60/10**

(86) International application number:
**PCT/KR2024/095953**

(87) International publication number:
**WO 2025/029123 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.08.2023 KR 20230101241**
**31.07.2024 KR 20240101477**

(71) Applicant: **LG Energy Solution, Ltd.**
**Seoul 07335 (KR)**

(72) Inventors:
• **KIM, Minjune**
  **Daejeon 34122 (KR)**
• **KIM, Sunhyung**
  **Daejeon 34122 (KR)**
• **LEE, Jegwon**
  **Daejeon 34122 (KR)**
• **LEE, Jungmin**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD FOR EVALUATING OF SLURRY DISPERSION STATUS AND METHOD FOR MANUFACTURING SLURRY USING SAME**

(57)    A method for evaluating slurry dispersion status according to an embodiment of the present disclosure measures an SMD value represented by the following Equation 1 for the slurry:

[Equation 1]

$$SMD = G'_1 / G'_2$$

wherein, $G'_1$ is an elastic modulus measured after stirring the slurry at a shear rate of 1000/s, and $G'_2$ is an elastic modulus measured after stirring the slurry at a shear rate of 10/s.

FIG. 1

Slurry A

EP 4 641 168 A1

**Description**

[TECHNICAL FIELD]

<u>Cross-Reference to Related Applications</u>

This application claims priority to and the benefit of Korean Patent Application No. 10-2023-0101241, filed on August 2, 2023, and Korean Patent Application No. 10-2024-0101477, filed on July 31, 2024, with the Korean Intellectual Property Office, the disclosures of which are incorporated herein in their entirety by reference.

The present disclosure relates to a method for evaluating slurry dispersion status and a method for producing slurry using the same

[BACKGROUND]

The use of mobile devices such as cell phones, laptops, camcorders, and digital cameras has been routinized in modern society, which accelerates the development of technologies in the fields related to the mobile devices. Further, as a measure to solve the atmospheric pollution caused from existing gasoline vehicles that uses fossil fuels, rechargeable secondary batteries are being used as power sources for electric vehicles(EV), hybrid electric vehicles(HEV), plug-in hybrid electric vehicles(P-HEV) and so on. Thus, the necessity to develop the secondary batteries is increasing.

Presently, commercially available secondary batteries include nickel-cadmium batteries, nickel-hydrogen batteries, nickel-zinc batteries, and lithium batteries. Of these batteries, lithium secondary batteries are emerging as the most popular, as they do not suffer from the memory effect, and therefore, are freely rechargeable, have low self-discharge rates, and have high energy density, as compared to nickel-based secondary batteries.

Typically, a lithium secondary battery uses a lithium-based oxide and a carbon material as a positive electrode active material and a negative electrode active material, respectively. The lithium secondary battery may include an electrode assembly fabricated by disposing a separator between a positive electrode and a negative electrode, which are coated with the positive electrode active material and the negative electrode active material, respectively.

Meanwhile, a slurry can be used for producing electrodes and separators used in lithium secondary batteries. Slurry can be produced by mixing and processing active material particles, a binder, a conductive material, a solvent, and the like. The dispersion status of slurry varies depending on the processing conditions and composition, but the dispersion status of slurry is an important factor that greatly affects whether or not a defect occurs in the process.

Thus, it is necessary to predict the electrode processability through quantification of the dispersion status of slurry. Conventionally, the evaluation of the slurry dispersion status has been performed using various methods and tools, for example, a variety of methods are applied, including a method of observing the dispersion status of particles using a microscope and measuring particle size and shape, an optical method of observing the particle size distribution through imaging technology, laser technology, and sensor technology, or a mechanical method of quantifying the slurry structure through measurement of the slurry viscosity, or the like.

However, for the optical method, it is difficult to apply to opaque slurries, and there is a problem that deviation occurs depending on the quantification method or application equipment. For the mechanical method, the limited information on the slurry structure results in a substantial lack of correlation between the slurry viscosity and issues related to the actual dispersion status, such as precipitations, changes over time, filter clogging, coating defects, etc.

Therefore, there is an urgent need to develop technologies on a method for evaluating slurry dispersion status, which is capable of evaluating changes in the slurry structure quickly and accurately and is applicable to a wide range of slurries, regardless of the slurry characteristics, such as transparency or opacity.

[DETAILED DESCRIPTION OF THE INVENTION]

[Technical Problem]

It is an object of the present disclosure to provide a method for evaluating slurry dispersion status that can predict in advance electrode processability according to slurry composition at the development stage, quickly evaluate structural changes in slurry when processability issues occur at the slurry producing stage, and predict in advance changes over time according to slurry storage period.

It is another object of the present disclosure to provide a method for producing a slurry having improved reliability using the method for evaluating slurry dispersion status.

However, the technical objects solved by the embodiments of the present disclosure are not limited to those disclosed above, and may be expanded in various ways within the scope of the technical idea included in the present disclosure.

[Technical Solution]

According to an embodiment of the present disclosure, there is provided a method for evaluating slurry dispersion status, which measures an SMD value represented by the following Equation 1 for the slurry:

$$[\text{Equation 1}]$$

$$SMD = G'_1 / G'_2$$

wherein,

G'$_1$ is an elastic modulus measured after stirring the slurry at a shear rate of 1000/s, and
G'$_2$ is an elastic modulus measured after stirring the slurry at a shear rate of 10/s.

In an embodiment, the slurry may include active material particles.
In an embodiment, the slurry may be stirred at a shear rate of 1000/s, and be in a state where a flow history has been removed.
In an embodiment, the G'$_1$ and the G'$_2$ may be respectively elastic moduli measured by stirring the slurry at the above shear rate and then applying vibration of 0.1 Hz to 1 Hz in a stopped state.
In an embodiment, the vibration may be 0.1 Hz or more and 0.5 Hz or less.
In an embodiment, the vibration may be 0.215 Hz.
In an embodiment, the vibration may be applied for 10 seconds or more and 30 seconds or less.
In an embodiment, as the SMD value is larger, the dispersion status instability of the slurry may be increased.
In an embodiment, when the SMD value is 0.1 or more and less than 5, the slurry dispersion status may be judged to be good.
In an embodiment, when the SMD value is 5 or more, the slurry dispersion status may be judged to be poor.
According to another embodiment of the present disclosure, there is provided a method for producing slurry, comprising the steps of: mixing an active material, a binder, and optionally a conductive material in a solvent phase to produce a slurry; and measuring an SMD value represented by the following Equation 1 for the slurry.

$$[\text{Equation 1}]$$

$$SMD = G'_1 / G'_2$$

wherein, G'$_1$ is an elastic modulus measured after stirring the slurry at a shear rate of 1000/s, and G'$_2$ is an elastic modulus measured after stirring the slurry at a shear rate of 10/s.
In an embodiment, the method may further comprise a step of judging that the slurry dispersion status is good when the SMD value is 0.1 or more and less than 5, and applying the slurry.
In an embodiment, the method may further comprise a step of judging that the slurry dispersion status is poor when the SMD value is 5 or more, and re-producing the slurry.

[Advantageous Effects]

The method for evaluating slurry dispersion status according to the present disclosure can predict in advance the electrode processability according to the composition at the slurry producing stage.
It is also possible to predict in advance processability issues such as coating defects, filter clogging, and mixing defects that may occur on the production line at the slurry producing stage.
In addition, it is possible to predict changes over time due to the storage of the slurry.
The method for producing slurry according to the present disclosure makes it easy to evaluate the dispersion status of the produced slurry and easily develop a slurry with improved stability, thereby improving product quality.

[BRIEF DESCRIPTION OF THE DRAWINGS]

FIG. 1 is a photograph evaluating the storage stability of slurry A.
FIG. 2 is a photograph evaluating the storage stability of slurry C.
FIG. 3 is a photograph evaluating the change over time of slurry B.

FIG. 4 is a photograph evaluating the change over time of slurry C.

[DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

Throughout the descriptions herein, when a certain part "includes" a component, this does not indicate that the certain part excludes other components, but indicates that the part may further include other components, unless otherwise defined.

In the embodiments above, expressions indicating directions such as "front," "rear," "left," "right," "up," and "down" have been used, but these expressions are used only to facilitate the description, and may vary, for example, depending on the location of a target object or an observer.

Furthermore, throughout the descriptions herein, "elastic modulus (G')" means a volume elastic modulus.

A method for evaluating slurry dispersion status according to an embodiment of the present disclosure provides a method for measuring an SMD value represented by the following Equation 1 for the slurry:

$$[\text{Equation 1}]$$

$$SMD = G'_1 / G'_2$$

The present inventors have confirmed that a slurry containing particles used as an organic/inorganic composite material exhibits thixotropy with sol-gel change characteristics, and has developed an index capable of evaluating the slurry dispersion status from the elastic modulus(G') based on these characteristics. Specifically, the index is expressed as in the above Equation 1.

That is, the present inventors have confirmed that the slurry was stirred at a shear rate of 1000/s, and then the elastic modulus was measured to obtain the $G'_1$ value; the slurry was stirred at a shear rate of 10/s, and then the elastic modulus was measured to obtain the $G'_2$ value; and as the value of ($G'_1 / G'_2$) is larger, the thixotropy is increased, which increases the instability of the slurry dispersion status due to flow, and may cause problems in the actual process, and that the SMD index represented by the Equation 1 can be an objective index.

This evaluation method can be applied to a slurry form of an organic/inorganic composite material, and without being limited thereto, specifically, the slurry can be applied to an electrode slurry containing active material particles, more specifically, to an electrode slurry for a lithium secondary battery.

An electrode slurry of an embodiment can be produced by mixing an active material, a binder, and optionally a conductive material in a solvent phase. The electrode slurry can be coated onto a current collector and dried to form an electrode composite layer, thereby preparing a positive electrode or a negative electrode.

The active material may be a positive electrode active material or a negative electrode active material.

As the positive electrode active material, a compound capable of reversible intercalation and deintercalation of lithium and known in the art can be used without limitation. Specifically, the positive electrode active material may be a lithium composite metal oxide including one or more metals such as cobalt, manganese, nickel, or aluminum with lithium.

Examples of the lithium composite metal oxide may include lithium-manganese-based oxides (e.g., $LiMnO_2$, $LiMn_2O_4$, and the like), lithium-cobalt-based oxides (e.g., $LiCoO_2$, and the like), lithium-nickel-based oxides (e.g., $LiNiO_2$, and the like), lithium-nickel-manganese-based oxides (e.g., $LiNi_{1-Y}Mn_YO_2$ (wherein 0<Y<1), $LiMn_{2-z}Ni_zO_4$ (wherein 0<Z<2), and the like), lithium-nickel-cobalt-based oxides (e.g., $LiNi_{1-Y1}Co_{Y1}O_2$ (wherein 0<Y1<1), and the like), lithium-manganese-cobalt-based oxides (e.g., $LiCo_{1-Y2}Mn_{Y2}O_2$ (wherein 0<Y2<1), $LiMn_{2-Z1}Co_{Z1}O_4$ (wherein 0<Z1<2), and the like), lithium-nickel-manganese-cobalt-based oxides (e.g., $Li(Ni_pCo_qMn_{r1})O_2$ (wherein 0<p<1, 0<q<1, 0<r1<1, and p+q+r1=1) or $Li(Ni_{p1}Co_{q1}Mn_{r2})O_4$ (wherein 0<p1<2, 0<q1<2, 0<r2<2, and p1+q1+r2=2), and the like), or lithium-nickel-cobalt-transition metal (M) oxides (e.g., $Li(Ni_{p2}Co_{q2}Mn_{r3}M_{S2})O_2$ (wherein M is selected from the group consisting of Al, Fe, V, Cr, Ti, Ta, Mg, and Mo; and p2, q2, r3, and s2 are atomic fractions of each independent element, and 0<p2<1, 0<q2<1, 0<r3<1, 0<s2<1, p2+q2+r3+s2=1), and the like), and the like, and any one or two or more compounds thereof may be included.

The binder resin is used to assist in binding between the active material and the conductive material, and in binding to the current collector. Non-limiting examples of the binder resin include polyvinylidene fluoride(PVDF), polyvinyl alcohol(PVA), polyacrylic acid(PAA), poly(methacrylic acid)(PMA), poly(methylmethacrylate)(PMMA), polyacrylamide(PAM), poly(methacrylamide), polyacrylonitrile(PAN), polymethacrylonitrile, polyimide(PI), alginic acid, alginate, chitosan, carboxymethyl cellulose(CMC), starch, hydroxypropyl cellulose, regenerated cellulose, polyvinylpyrrolidone, tetrafluoroethylene, polyethylene, polypropylene, an ethylenepropylene-diene polymer(EPDM), sulfonated-EPDM, styrene-butadiene rubber(SBR), fluorine rubber, and various copolymers thereof. The binder may be included in an amount of 1% by weight to 30% by weight, specifically 1% by weight to 10% by weight, and more specifically 1% by weight to 5% by weight, based on the total weight of the slurry.

The conductive material is used to further improve conductivity of the electrode active material. The conductive material is not particularly limited as long as it has electrical conductivity without causing chemical changes in the battery. Examples of the conductive material include graphite such as natural graphite or artificial graphite; carbon blacks such as carbon black, acetylene black, ketjen black, channel black, furnace black, lamp black, and thermal black; conductive fibers such as a carbon fiber and a metallic fiber; metallic powders such as carbon fluoride powder, aluminum powder, and nickel powder; conductive whiskers such as zinc oxide and potassium titanate; conductive metal oxides such as titanium oxide; polyphenylene derivatives; and the like. The conductive material may be included in an amount of 1% by weight to 30% by weight, specifically 1% by weight to 10% by weight, and more specifically 1% by weight to 5% by weight, based on the total weight of the slurry.

The solvent may generally comprise an organic solvent and/or an aqueous solvent. For example, as the organic solvent, one or more selected from the group consisting of N-methyl-2-pyrrolidone(NMP), methoxy propyl acetate, butyl acetate, glycol acid, butyl ester, butyl glycol, methyl alkyl polysiloxane, alkylbenzene, propylene glycol, xylene, monophenyl glycol, aralkyl modified methylalkyl polysiloxane, polyether modified dimethyl polysiloxane copolymer, polyacrylate, alkylbenzene, diisobutyl ketone, organic modified polysiloxane, butanol, isobutanol, modified polyacrylate, modified polyurethane, and polysiloxane-modified polymer may be preferably used.

Further, water may be used as the aqueous solvent.

Hereinafter, a method for evaluating a slurry dispersion status, which measures an SMD value represented by the Equation 1, will be described.

In Equation 1, $G'_1$ is an elastic modulus measured after stirring the slurry at a shear rate of 1000/s. Specifically, it is an elastic modulus measured by stirring the slurry at a shear rate of 1000/s and then applying vibration of 0.1 Hz or more and 1 Hz or less to the slurry in the state where the slurry is stopped.

In Equation 1, $G'_2$ is an elastic modulus measured after stirring the slurry at a shear rate of 10/s. Specifically, it is an elastic modulus measured by stirring the slurry at a shear rate of 10/s and then applying vibration of 0.1 Hz or more and 1 Hz or less to the slurry in the state where the slurry is stopped.

The stirring of the slurry may be performed for 30 seconds or more at each shear rate, for example, for 60 seconds. If the stirring is performed for less than 30 seconds, the slurry may not reach a steady state, or the operation/measurement reliability of the device may deteriorate.

The stirring is not limited as long as it can stir a slurry having thixotropy, and can be carried out, for example, via a rheometer device, and more specifically, by a Couette cell of a rheometer.

The slurry is stirred under the above conditions, and then a vibration is applied in the state where the slurry is stopped, to measure an elastic modulus. For example, the elastic modulus can be measured through an oscillatory frequency sweep test.

In this case, the vibration applied to the slurry may be a vibration within a range of 0.1 Hz or more and 1 Hz or less. If a vibration of less than 0.1 Hz is applied outside the above range, the measurement error of the device may increase, which may reduce reliability. Furthermore, if vibration of more than 1 Hz is applied, the structure of the slurry may be destroyed, which is not preferable.

Therefore, the vibration frequency at which the change in the slurry structure appears to be the greatest may be selected within the above range, and the elastic modulus(G') values at this specific vibration frequency may be set as the target to be introduced into Equation 1.

The present inventors have confirmed that the selection of such values is not limited and may be affected by factors such as the composition of the slurry to be measured, but generally shows greater changes at lower Hz values. For example, the vibration applied to the slurry may be specifically a vibration of 0.1 Hz or more and 0.5 Hz or less, more specifically a vibration of 0.1 Hz or more and 0.3 Hz or less, and most specifically a vibration of 0.215 Hz.

At this time, the vibration may be applied for 10 seconds or more and 30 seconds or less, specifically 10 seconds or more and 20 seconds or less, and more specifically 10 seconds or more and 15 seconds or less.

Further, the elastic modulus of the slurry can be measured for a slurry in the range of 20 degrees Celsius or more and 30 degrees Celsius or less, and for example, can be measured for a slurry of 23 degrees Celsius.

The elastic modulus of the slurry can also be affected by temperature, and thus it is preferable to measure the slurry at the same temperature. At this time, if the temperature is too high, the viscosity of the slurry is decreased, and if the temperature is too low, the viscosity is increased. Thus, room temperature (23 degrees Celsius) may be preferred since this is the temperature at which the actual slurry is used in the process.

The values of $G'_1$ and $G'_2$ are obtained for the elastic modulus measured as described above, and substituted into Equation 1, thereby being able to obtain the SMD value.

Meanwhile, the slurry evaluation method of the present disclosure removes and initializes the flow history by stirring the slurry before measuring the elastic modulus in order to improve the measurement precision and reproducibility.

In this case, the stirring for the initialization may be performed for 30 seconds to 100 seconds at a shear rate of 500/s to 1000/s, and more specifically, the stirring may be performed for 50 seconds to 80 seconds at a shear rate of 1000/s to 1500/s. For example, the stirring may be performed for 60 seconds at a shear rate of 1000/s.

If the stirring is performed at too low a speed or for too short a time outside the above range, initialization such as removal of flow history may not be performed properly, and if the stirring is performed at too high a speed or for too long a time, it is difficult to achieve uniform stirring and a slip phenomenon may occur, which is not preferable.

The stirring device is not limited as long as it is a device that stirs a slurry having a thixotropy similar to the above, but the stirring can be performed, for example, through a rheometer device, and more specifically, by a Couette cell of a rheometer.

It is judged that as the SMD value of the Equation 1 obtained through this process is larger, the instability of the slurry disperse status is increased. Specifically, if the SMD value is 0.1 or more and less than 5, the slurry dispersion status can be judged to be good. In addition, if the SMD value is 5 or more, the slurry dispersion status can be judged to be poor. If the slurry dispersion status is judged to be good, the slurry can be expected to have excellent reliability. If the slurry dispersion status is judged to be poor, the slurry can be expected to cause problems such as slurry precipitation, change over time, and filter clogging when applied to an actual process.

Therefore, through the slurry evaluation method, it is possible to predict in advance processability issues according to the composition and mixing conditions from the slurry production step and production line, derive appropriate composition and mixing conditions, and also examine the suitability of slurry storage, etc.

In addition, such a method is not limited to optical characteristics, and according to the results of review by the present inventors, it has been confirmed that the information obtained therefrom has an effect on the changes over time, precipitation, etc. that appear in the actual slurry, and thus the slurry dispersion status can be accurately evaluated.

The method for producing a slurry according to an embodiment of the present disclosure can utilize the above-described method for evaluating slurry dispersion status.

A method for producing a slurry according to the present disclosure comprises the steps of:

mixing an active material, a binder, and optionally a conductive material in a solvent phase to produce a slurry; and measuring an SMD value represented by the following Equation 1 for the slurry.

$$[\text{Equation 1}]$$

$$SMD = G'_1 / G'_2$$

wherein,

$G'_1$ is an elastic modulus measured after stirring the slurry at a shear rate of 1000/s, and
$G'_2$ is an elastic modulus measured after stirring the slurry at a shear rate of 10/s.

In an embodiment, the slurry is an electrode slurry, and the step of producing the slurry is a step of mixing an active material, a binder, and optionally a conductive material in a solvent phase to manufacture the slurry. The above-mentioned contents are applied similarly to each component of the slurry, and a detailed description will be omitted.

The step of measuring the SMD value is a step of measuring the SMD value represented by the following Equation 1 for the produced slurry.

$$[\text{Equation 1}]$$

$$SMD = G'_1 / G'_2$$

wherein,

$G'_1$ is an elastic modulus measured after stirring the slurry at a shear rate of 1000/s, and
$G'_2$ is an elastic modulus measured after stirring the slurry at a shear rate of 10/s.

For the specific explanation of Equation 1, the above-mentioned contents are similarly applied.

Meanwhile, the slurry producing method according to an embodiment includes a step of producing a slurry and a step of measuring the SMD value of the produced slurry, and may further include the following steps.

In an embodiment, the slurry producing method may further include a step of judging that the slurry dispersion status is good when the measured SMD value is 0.1 or more and less than 5, and applying the produced slurry. The slurry may be applied and coated to a current collector, and then dried and rolled to produce an electrode.

Alternatively, the method for producing a slurry according to an embodiment may further comprise a step of judging that the slurry dispersion status is poor when the SMD value is 5 or more, and applying the slurry. For example, a dispersion status defect may occur due to the incorporation of moisture or foreign substances during the slurry producing process. Alternatively, during the slurry producing process, an error may occur when mixing each component by weight, resulting in a dispersion status defect. The present disclosure can measure the SMD of the produced slurry and then predict the dispersion status defect of the slurry in advance based on the SMD value.

As described above, the slurry producing method of an embodiment comprises a step of producing a slurry and a step of measuring the SMD value of the produced slurry, thereby being able to predicting in advance the dispersion status of a slurry before proceeding with the process, and minimizing process defects.

Therefore, the present disclosure can provide a method of producing a slurry with improved reliability, facilitate the development of a slurry with improved stability, and consequently improve product quality.

## **Examples**

Hereinafter, with reference to Examples and Comparative Examples, the evaluation method of the present disclosure, the slurry stability that the index expressed by the above Equation 1 appears in the actual process, for example, a reliable correlation with precipitation, changes over time, filter clogging, etc. will be described.

<Example 1: Manufacture of slurry A>

An active material($Li(Ni_{1/3}Co_{1/3}Mn_{1/3})O_2$)), a conductive material (carbon nanotube), and binder (polyvinylidene fluoride) were mixed in a weight ratio of 96.4:1.8:1.8 in an NMP solvent at a solid content concentration of 75%.

<Example 2: Manufacture of slurry B>

An active material ($Li(Ni_{1/3}Co_{1/3}Mn_{1/3})O_2$)), a conductive material (carbon black), and a binder (polyvinylidene fluoride) were mixed in a weight ratio of 96.4:1.8:1.8 in an NMP solvent with a solid content concentration of 75%.

<Comparative Example 1: Manufacture of Slurry C>

An active material (LFP), a conductive agent (carbon nanotube), and a binder (polyvinylidene fluoride) were mixed in a weight ratio of 96.4:1.8:1.8 in an NMP solvent with a solid content concentration of 60%.

<Experimental Example 1>

The following process was performed on the above slurry A to measure $G'_1$.

First, the slurry A in the normal temperature (23 degrees Celsius) was placed in the Couette cell of a rheometer and stirred at a shear rate of 1000/s for 60 seconds to remove the flow history of the slurry.

Subsequently, the slurry A was stirred at a shear rate of 1000/s for 60 seconds, and then an oscillatory frequency sweep test was performed while applying a vibration of 0.215 Hz in a stopped state. However, before applying the vibration of 0.215 Hz, in order to find out the frequency value that shows the greatest characteristic change in the slurry structure, various frequencies within the range of 0.1 Hz to 1 Hz were applied for 15 seconds to measure the elastic modulus value.

Here, for the test, the shear rate was set to 1000/s, the amplitude (strain) to 0.5%, and the frequency to 0.1-1 Hz.

The same process was carried out for the slurry B and slurry C, and each $G'_1$ was measured.

<Experimental Example 2>

The following process was performed for the slurry A to measure $G'_2$.

First, the slurry A in the normal temperature (23 degrees Celsius) was placed in the Couette cell of a rheometer, and stirred at a shear rate of 1000/s for 60 seconds to remove the flow history of the slurry.

Subsequently, the slurry A was stirred at a shear rate of 10/s for 60 seconds, and then an oscillatory frequency sweep test was performed in a stopped state while applying a vibration of 0.215 Hz as in Experimental Example 1.

Here, for the test, the shear rate was set to 10/s, the amplitude (strain) to 0.5%, and the frequency to 0.1-1 Hz.

The same process was performed for the slurry B and slurry C to measure their respective $G'_2$.

The elastic modulus values measured in the Experimental Examples 1 and 2 are shown in Table 1 below.

[Table 1]

| Shear rate | Slurry A | Slurry B | Slurry C |
|---|---|---|---|
| 10/s | 7.480 | 0.936 | 2.114 |
| 1000/s | 7.683 | 2.237 | 15.770 |

<Experimental Example 3>

Referring to Table 1 and Equation 1, the SMD values of the slurry A, slurry B, and slurry C were measured, and shown in Table 2 below. In Table 2, the SMD values are values which was rounded off to the third decimal place.

[Table 2]

| Category | Slurry A | Slurry B | Slurry C |
|---|---|---|---|
| SMD(@ 0.215Hz) | 1.02 | 2.39 | 7.46 |

Referring to Table 2, the slurry A and slurry B having SMD values of less than 5 were judged to have a good slurry dispersion status. The slurry C having SMD values of more than 5 was judged to have a poor slurry dispersion status. Namely, it can be predicted that the structural instability is high.

<Experimental Example 4>

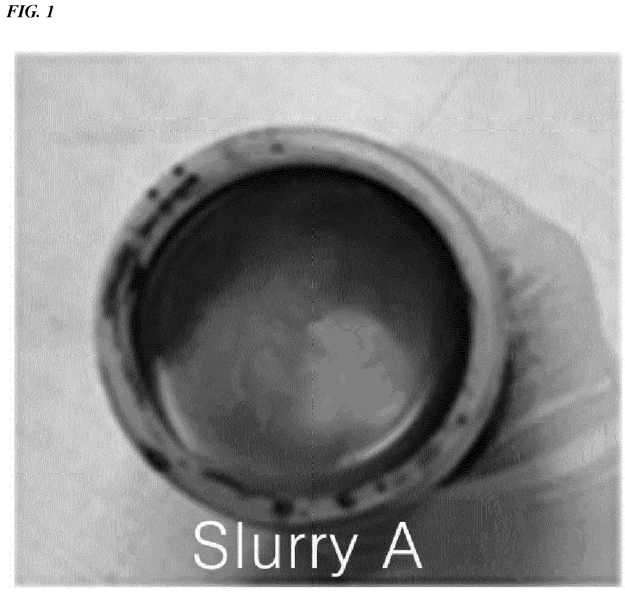

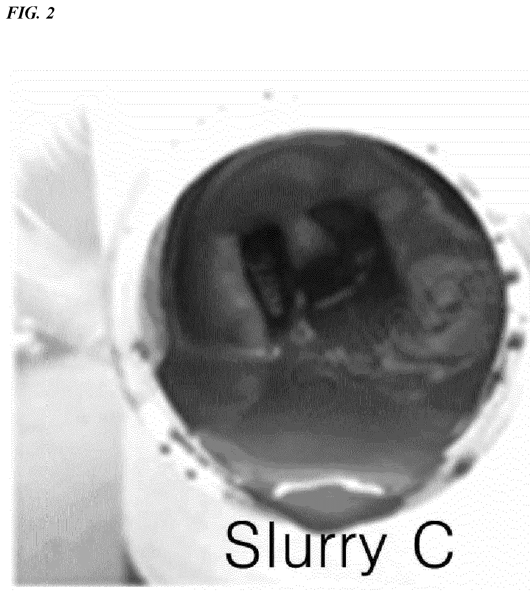

In order to confirm the storage stability of the slurries A and C produced above, each slurry in the normal temperature (23 degrees Celsius) was injected into a glass substrate, and left in an environment of 23 degrees Celsius for 7 days to confirm whether any precipitate was generated. The results are shown in FIGS. 1 and 2 below.
It can be confirmed that referring to FIG. 1, the slurry A did not generate any precipitate, while referring to FIG. 2, a large amount of precipitate was generated in slurry C.

<Experimental Example 5>

In order to confirm the filter clogging for the slurries B and C produced above, when slurries B and C in the normal temperature (23 degrees Celsius) were each injected into a 150 mesh filter, the pressure applied to the filter over time was measured with a pressure sensor.
The measurement results showed that the pressure of slurry B increased slowly over time, while the pressure of slurry C increased rapidly from the beginning. That is, it was expected that filter clogging would occur when slurry C was used.

<Experimental Example 6>

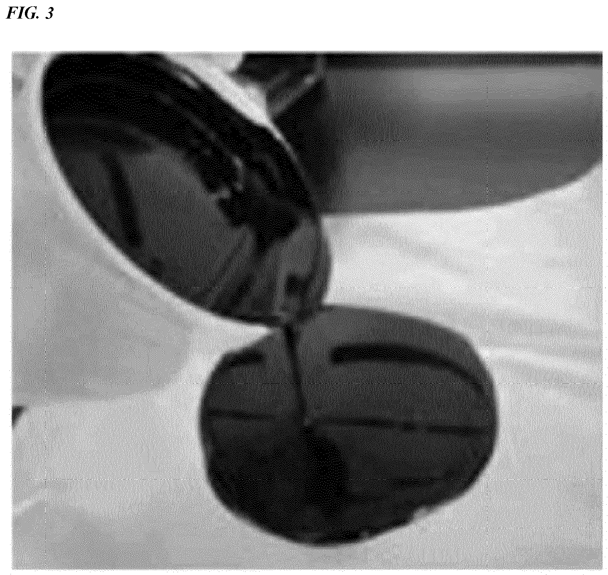

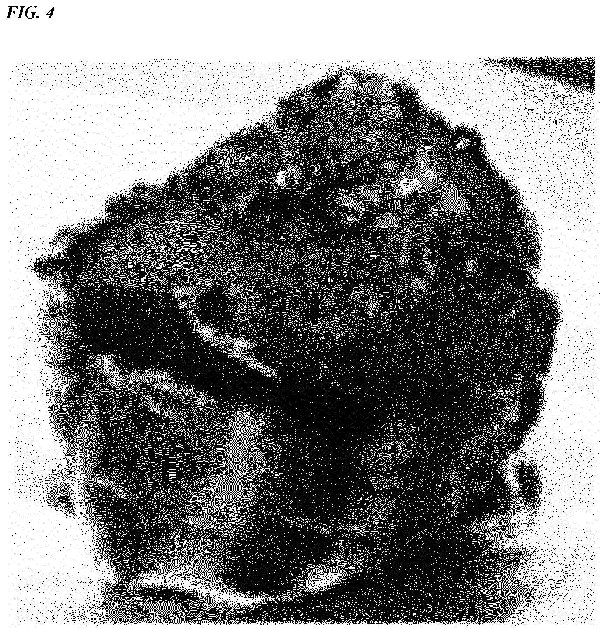

In order to confirm the change over time for the slurries A and C produced above, 100 ml of each slurry in the normal temperature (23 degrees Celsius) was poured onto a glass substrate, and left in an environment of 23 degrees Celsius for 5 days. The results are shown in FIGS. 3 and 4 below.
It can be confirmed that referring to FIG. 3, slurry B maintains the slurry state, while referring to FIG. 4, slurry C firmly solidifies and changes into a phase close to a solid state.
Considering the Experimental Examples 3 to 6, the quality of the slurry dispersion status was judged to be good or poor using the evaluation method according to the present invention, and the results of the precipitation evaluation, filter clogging evaluation, and change over time corresponding to the evaluation were obtained. Therefore, it can be confirmed that the method for evaluating slurry dispersion status according to the present disclosure can be an indicator of the dispersion status of an actual slurry.
While the embodiments of the present disclosure have been described in detail, the technical scope of the present disclosure is not limited to the embodiments, and also includes various modifications and improvements made by one of ordinary skill in the art using the concepts defined in the claims attached therewith.

Claims

1.   A method for evaluating slurry dispersion status, which measures an SMD value represented by the following Equation 1 for the slurry:

$$[\text{Equation 1}]$$

$$SMD = G'_1 / G'_2$$

wherein,

$G'_1$ is an elastic modulus measured after stirring the slurry at a shear rate of 1000/s, and
$G'_2$ is an elastic modulus measured after stirring the slurry at a shear rate of 10/s.

2. The method for evaluating slurry dispersion status according to claim 1, wherein the slurry includes active material particles.

3. The method for evaluating slurry dispersion status according to claim 1, wherein the slurry is stirred at a shear rate of 1000/s, and is in a state where a flow history has been removed.

4. The method for evaluating slurry dispersion status according to claim 1, wherein the $G'_1$ and the $G'_2$ are respectively elastic moduli measured by stirring the slurry at the above shear rate and then applying a vibration of 0.1 Hz or more and 1 Hz or less in a stopped state.

5. The method for evaluating slurry dispersion status according to claim 4, wherein the vibration is 0.1 Hz or more and 0.5 Hz or less.

6. The method for evaluating slurry dispersion status according to claim 4, wherein the vibration is 0.215 Hz.

7. The method for evaluating slurry dispersion status according to claim 4, wherein the vibration is applied for 10 seconds or more and 30 seconds or less.

8. The method for evaluating slurry dispersion status according to claim 1, wherein as the SMD value is larger, the dispersion status instability of the slurry is increased.

9. The method for evaluating slurry dispersion status according to claim 1, wherein when the SMD value is 0.1 or more and less than 5, the slurry dispersion status is judged to be good.

10. The method for evaluating slurry dispersion status according to claim 1, wherein when the SMD value is 5 or more, the slurry dispersion status is judged to be poor.

11. A method for producing a slurry, comprising the steps of:

mixing an active material, a binder, and optionally a conductive material in a solvent phase to produce a slurry; and measuring an SMD value represented by the following Equation 1 for the slurry.

$$[\text{Equation 1}]$$

$$SMD = G'_1 / G'_2$$

wherein,

$G'_1$ is an elastic modulus measured after stirring the slurry at a shear rate of 1000/s, and
$G'_2$ is an elastic modulus measured after stirring the slurry at a shear rate of 10/s.

12. The method for producing a slurry according to claim 11, further comprising judging that the slurry dispersion status is good when the SMD value is 0.1 or more and less than 5, and applying the slurry.

13. The method for producing a slurry according to claim 11, further comprising judging that the slurry dispersion status is poor when the SMD value is 5 or more, and re-producing the slurry.

FIG. 1

*FIG. 2*

FIG. 3

FIG. 4

## INTERNATIONAL SEARCH REPORT

| International application No. |
|---|
| **PCT/KR2024/095953** |

### A. CLASSIFICATION OF SUBJECT MATTER

**G01N 11/10**(2006.01)i; **H01M 10/42**(2006.01)i; **G01N 11/00**(2006.01)i

According to International Patent Classification (IPC) or to both national classification and IPC

### B. FIELDS SEARCHED

Minimum documentation searched (classification system followed by classification symbols)

G01N 11/10(2006.01); B28B 1/30(2006.01); C04B 35/622(2006.01); G01N 11/00(2006.01); G01N 15/04(2006.01); H01M 4/02(2006.01); H01M 4/04(2006.01); H01M 4/1393(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 슬러리(slurry), 분산 평가(dispersion evaluation), 탄성계수(elastic modulus), 전단 속도(shear rate), 교반(stirring), 진동(vibration)

### C. DOCUMENTS CONSIDERED TO BE RELEVANT

| Category* | Citation of document, with indication, where appropriate, of the relevant passages | Relevant to claim No. |
|---|---|---|
| Y | JP 2001-313027 A (NGK INSULATORS LTD.) 09 November 2001 (2001-11-09)<br>See paragraphs [0018]-[0040] and figures 1 and 2. | 1-13 |
| Y | KR 10-2022-0103456 A (LG CHEM, LTD.) 22 July 2022 (2022-07-22)<br>See paragraphs [0097] and [0100]. | 1-13 |
| A | JP 2020-159825 A (RION CO., LTD.) 01 October 2020 (2020-10-01)<br>See paragraph [0088], and claim 1. | 1-13 |
| A | JP 2005-067920 A (MATSUSHITA ELECTRIC IND CO., LTD.) 17 March 2005 (2005-03-17)<br>See claim 1. | 1-13 |
| A | KR 10-2017-0065175 A (LG CHEM, LTD.) 13 June 2017 (2017-06-13)<br>See claim 1. | 1-13 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 October 2024** | **28 October 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/095953**

| Patent document cited in search report | | | Publication date (day/month/year) | Patent family member(s) | | | Publication date (day/month/year) |
|---|---|---|---|---|---|---|---|
| JP | 2001-313027 | A | 09 November 2001 | JP | 3887140 | B2 | 28 February 2007 |
| KR | 10-2022-0103456 | A | 22 July 2022 | None | | | |
| JP | 2020-159825 | A | 01 October 2020 | None | | | |
| JP | 2005-067920 | A | 17 March 2005 | None | | | |
| KR | 10-2017-0065175 | A | 13 June 2017 | KR | 10-2070555 | B1 | 29 January 2020 |

Form PCT/ISA/210 (patent family annex) (July 2022)

**REFERENCES CITED IN THE DESCRIPTION**

**Patent documents cited in the description**

- KR 1020230101241

- KR 1020240101477